(19) Europäisches Patentamt
European Patent Office
Office européen des brevets

(11) Veröffentlichungsnummer: **0 297 602 A2**

(12) **EUROPÄISCHE PATENTANMELDUNG**

(21) Anmeldenummer: **88110559.7**

(22) Anmeldetag: **01.07.88**

(51) Int. Cl.4: **C03C 25/02 , C08J 5/08 , C07F 7/18**

(30) Priorität: **01.07.87 DD 304416**

(43) Veröffentlichungstag der Anmeldung:
**04.01.89 Patentblatt 89/01**

(84) Benannte Vertragsstaaten:
**DE FR GB IT NL**

(71) Anmelder: **Akademie der Wissenschaften der DDR**
**Otto-Nuschke-Strasse 22/23**
**DDR-1086 Berlin(DD)**

(72) Erfinder: **Zwiersch, Manfred**
**Stübelallee 19 A**
**DDR-8019 Dresden(DD)**
Erfinder: **Mäder, Edith, Dr.**
**Senftenberger Strasse 10**
**DDR-8036 Dresden(DD)**
Erfinder: **Freitag, Karl-Heinz, Dr.**
**Dorfstrasse 55**
**DDR-8101 Ullersdorf(DD)**
Erfinder: **Plonka, Rosemarie**
**Nossener Strasse 3 A**
**DDR-7260 Oschatz(DD)**
Erfinder: **Radatz, Marianne**
**Am Langen Rain 47**
**DDR-7260 Oschatz(DD)**
Erfinder: **Momberg, Heinz**
**Karl-Liebknecht-Strasse 6**
**DDR-7260 Oschatz(DD)**
Erfinder: **Barth, Manfred**
**Dr.-Külz-Ring 23**
**DDR-7260 Oschatz(DD)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **Schlichte für Glasfasern, ihre Herstellung und ihre Verwendung.**

(57) Die Erfindung betrifft eine Schlichte zur Behandlung von Glasfasern, die zur Verstärkung in Thermoplaste eingearbeitet werden, ihre Herstellung sowie ihre Verwendung. Die Schlichte enthält eine Schiffsche Base der Formel

EP 0 297 602 A2

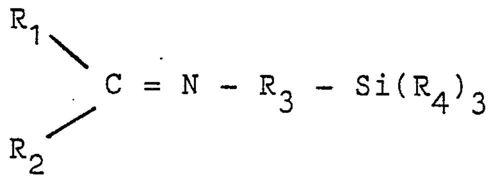

auf der Basis eines Ketons und eines reaktiven Aminosilanen vorzugsweise in Konzentrationen von 0,05 bis 2 Masse-%, bezogen auf die Trockenmasse. Durch Verwendung von Schlichten mit diesen Schiffschen Basen werden die Zugfestigkeits- und Zähigkeitseigenschaften glasfaserverstärkter Thermoplaste wesentlich verbessert.

## Schlichte für Glasfasern, ihre Herstellung und ihre Verwendung

Die Erfindung betrifft eine Schlichte für Glasfasern, die zur Verstärkung in Thermoplaste eingearbeitet werden und bei der die Schlichte als Bestandteil ein reaktives Silan aufweist, ihre Herstellung, ihre Verwendung und die damit beschichteten Glasfasern. Durch Einsatz der beschichteten Glasfasern als Verstärkungsmaterial in Thermoplasten werden die Verbundeigenschaften erheblich verbessert.

Es ist bekannte, für die Kunststoffverstärkung zunächst eine Schlichte üblicher Zusammensetzung auf E-Glasfasern aufzubringen. In der Regel erfolgt die Präparation der Glasfaserstoffe mit einer Spinnschlichte. Sie enthält für die Herstellung von Glasseide hauptsächlich geeignete Haftvermittler, Bindemittel in wäßriger Dispersion zur Bündelung der Vielzahl von Einzelfäden sowie Hilfsmittel für die Verarbeitbarkeit der Fäden in Nachfolgestufen (Löwenstein, K.L., The manufacturing technology of continuous glass fibres, Elsevier Scientific Publishing Company, Amsterdam, London, New York, 1973, S. 191-233). Anhand der Vielzahl der beschriebenen Schlichtekompositionen läßt sich einschätzen, daß die Schlichte in ihrer Gesamtheit immer mehr zu einem integralen Verbundbestandteil und damit zu einem aktiven Träger der Verbundkennwerte wird.

Bekannt ist es, zur Glasfaserverstärkung von Polyolefinen, PA und PETP Kombinationen von Haftvermittlern und insbesondere Aminosilane, Vinylsilane und Methacrylsilane einzusetzen, wobei eine eindeutige Zuordnung spezieller Haftmittel zu konkreten Matrices nicht beschrieben ist. Die Anwendung ist sowohl in Substanz als auch als spezielles Umsetzungsprodukt bzw. als Haftmittelgemisch beschrieben. Die bekannten Lösungen erreichen meist nur eine partielle Verbesserung der mechanischen Eigenschaften von glasfaserverstärkten Thermoplasten, oder es handelt sich um schwierig herzustellende bzw. vom Gesichtspunkt des Arbeitsschutzes schwierig zu handhabende Umsetzungsprodukte bestimmter Silane. Eine deutliche Erhöhung sämtlicher Eigenschaftskennziffern der Verbunde mit vertretbarem Modifizierungsaufwand wird bisher kaum erreicht.

Weiter sind die Herstellung und der Einsatz von Azidosilanen (Diazo-, Azidoformiat-, Hexylsulfonylazidosilan), besonders für die Polyolefinverstärkung, bekannt (DE-A1-2 528 382, DE-A1-2 528 398, GB-B 1 275 120). Nachteilig ist dabei hinsichtlich des Arbeitsschutzes die Verwendung von Azidosilanen, da sie sehr explosiv sind. Zur Erhöhung der Zugfestigkeit bei verstärkten Thermoplasten werden Silane vom Polyazamidtyp eingesetzt (DE-A1-2 802 242, DE-A1-2 802 243). Es sind ferner Schlichtekompositionen für Thermoplaste beschrieben, die eine verbesserte UV-Beständigkeit bewirken und unter Einsatz eines aliphatischen Urethans, ureidfunktioneller Silane unu Aminosilanen hergestellt sind (DE-A1-3 101 457).

Zur Verbesserung der Adhäsion von Polyolefinen an Glasfasern wird die zusätzliche Einarbeitung von t-Butylhydroxyethylperoxid beschrieben (BE-B 0 819 238). Zur Verstärkung von Kunststoffen und Elastomeren mit Glasfasern wird die vorteilhafte Verwendung einer Schlichte mit Silicon-Aminimid-Verbindungen beschrieben (US-A-3 946 131). Weiterhin werden Mercaptoverbindungen eingesetzt, die z.B. durch Reaktion mit Isocyanaten reversibel inhibiert sind (US-A-4 184 998). Auch die Herstellung von reaktiven Silanen aus Mercapto- oder Aminosilanen und Dicarbonsäuren ist beschrieben (US-A-3 922 436). Weiterhin sind auch Umsetzungen von Amino-, Epoxy- oder Mercaptosilanen mit Diethylenglykolethern beschrieben (EP-C-85 831).

Zur Herstellung verstärkter Kunststoffe werden weiterhin Aziridine als Faser-Matrix-Bindemittel genutzt (JP-B-48 100 438). Als Glasfaser-Bindemittel ist die Verwendung von Carboxyamidotrialkoxysilanen beschrieben (BE-B-824 644). Verstärkte thermoplastische Massen können ferner auch hergestellt werden durch Einsatz von 0,05 bis 5,5 Masse-% eines Metallocens der allgemeinen Formel $(C_6H_5)_2MeX_2$ oder eine Kombination eines Ferrocenabkömmlings mit einem Acryloxysilan (DE-A1-2 223 022). Zur Behandlung von Verstärkungsglasfasern ist auch ein Silan beschrieben, das 2 bis 3 hydrolysierbare Gruppen am Si-Atom und eine Organogruppe mit Polyalkylenoxidstruktur aufweist (DE-A1-2 743 682). Bekannt sind auch Haftmittel zur Verstärkung von Polymeren auf der Basis eines Aminosilans mit einer Azamidgruppe und mindestens einer sekundären oder tertiären Aminogruppe (EP-B-12 834), ferner die Umsetzung von Aminosilanen mit Bis(Maleinimid) in Methylenchlorid (GB-B-1 477 792) sowie auch die Verwendung von Aminimidsilanen, die aus Epoxysilanen mit Dialkylhydrazin hergestellt sind (US-A-3 949 140).

Ziel der Erfindung ist es, Schlichten und ihre Herstellung anzugeben, die das Verbundkennwerteniveau in glasfaserverstärkten Thermoplasten anheben.

Der Erfindung liegt die Aufgabe zugrunde, geeignetere Schlichtezusammensetzungen zur Oberflächenbehandlung von Glasfasern sowie ihre Herstellung und Verwendung anzugeben.

Die Aufgabe wird anspruchsgemäß gelöst. Die abhängigen Ansprüche betreffen vorteilhafte Ausführungsformen.

Die erfindungsgemäße Schlichte zur Behandlung von Glasfasern, die zur Verstärkung in Thermoplaste

eingearbeitet werden, wobei die Schlichte als Bestandteil ein reaktives Silan aufweist, ist dadurch gekennzeichnet, daß sie eine Schiffsche Base der Formel

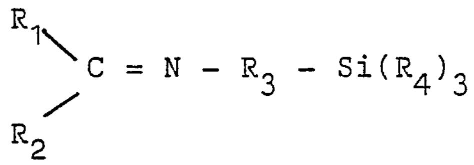

enthält, in der bedeuten:

$R_1$, $R_2$ zugleich oder unabhängig
- Wasserstoff,
- einen aliphatischen Rest mit 1 bis 18 C-Atomen,
- einen aliphatischen Rest mit einer oder mehreren ethylenisch ungesättigten Gruppen,
- einen cycloaliphatischen Rest,
- einen aromatischen, ggfs. substituierten und ggfs. aus mehreren Kernen bestehenden Rest oder
- einen Carbonylgruppen enthaltenden aliphatischen, cycloaliphatischen oder aromatischen Rest,

$R_3$ -einen zweiwertigen aliphatischen, cyclo aliphatischen oder aromatischen und ggfs. substituierten Rest,
- einen zweiwertigen aliphatischen Rest mit 1 bis 18 C-Atomen mit einer oder mehreren ethylenisch ungesättigten Gruppen oder
- einen zweiwertigen, ein oder mehrere Stickstoffatome enthaltenden aliphatischen Rest

und

$R_4$ einen Methoxy-, Ethoxy-, Propoxy-, n-Butoxy-, Acetoxy-, $\beta$-Methoxy- oder $\beta$-Ethoxy-Rest.

Besonders günstige Ergebnisse werden mit Schlichten mit einer Schiffschen Base erhalten, in deren Formel $R_1$ und $R_2$ Methyl, $R_3$ Propylen $-CH_2-CH_2-CH_2-$ und $R_4$ Ethoxy bedeuten, sowie mit Schlichten mit einer Schiffschen Base, in deren Formel $R_1$ bzw. $R_2$ Ethyl, Propyl, Butyl oder Pentyl, $R_3$ Methylen $-CH_2-$, Ethylen $-CH_2-CH_2-$, Propylen $-CH_2-CH_2-CH_2-$ oder Butylen $-CH_2-CH_2-CH_2-CH_2-$ und $R_4$ Methoxy, Ethoxy, Propoxy, n-Butoxy oder Acetoxy bedeuten.

Die erfindungsgemäße Schlichte enthält die Schiffsche Base vorzugsweise in einer Konzentration von 0,05 bis 2 Masse-%, bezogen auf die Trockenmasse.

Eine besonders günstige Schlichte besitzt folgende Zusammensetzung:

10 bis 60 Masse-% Polyolefin,
0 bis 50 Masse-% Polyurethan,
0 bis 1 Masse-% Vinylsilan und
0,05 bis 2 Masse-% Schiffsche Base,
bezogen auf die Trockenmasse auf dem Glasfaden, wobei die Summe der Prozentgehalte der Bestandteile jeweils 100 % beträgt.

Das erfindungsgemäße Verfahren zur Herstellung der Schlichte ist gekennzeichnet durch folgende Schritte:

(A) Herstellung eines Haftmittelgemisches durch

- Vorlegen eines Teils der vorgesehenen Gesamtmenge an Wasser,
- Einstellung des pH-Wertes auf einen Wert im sauren Bereich durch Zusatz einer Säure,
- Zugabe der entsprechenden Schiffschen Base,
- Nacheinstellung des pH-Wertes durch Zusatz einer Säure,
- Zugabe des Vinylsilans

und

- Vervollständigung der Umsetzung unter Rühren,

(B) Herstellung eines Bindemittelgemisches durch

- Vorlegen des restlichen Teils der vorgesehenen Gesamtmenge an Wasser
und
- aufeinanderfolgende Zugabe der Polyolefindispersion und ggfs. eines Gleitmittels
und

(C) Mischen des Haftmittelgemisches aus (A) und des Bindemittelgemisches aus (B) und pH-Einstellung.

Das Verfahren gemäß der Erfindung zur Herstellung ge schlichteter Glasfasern zum Einbringen als Verstärkungsmaterial in Thermoplaste ist gekennzeichnet durch
- Erzeugung von Glasfasern aus einer Glasschmelze durch Verspinnen,
- Beschichtung mit der erfindungsgemäßen Schlichte,
- Vereinigung der Glasfaser-Filamente zu einem Spinnfaden
und
- Trocknen der Glasfasern bei mindestens 125 °C und vorzugsweise bei 125 bis 140 °C.

Die erfindungsgemäß eingesetzte Schiffsche Base stellt ein spezielles reaktives Silan dar; sie ist insbesondere aus üblichen bzw. handelsüblichen Aminosilanen und entspre chenden Ketonen in an sich bekannter Weise erhältlich, ggfs. unter Verwendung eines üblichen Katalysators.

Die Schiffsche Base wird ohne zusätzliche Reinigung bzw. weitere Verarbeitungsschritte aus der Reaktionslösung in der Schlichte eingesetzt.

Durch die erfindungsgemäße Schlichte können die Zugfestigkeits- und Zähigkeitseigenschaften glasfaserverstärkter Thermoplaste, vorzugsweise bei uer Rovingherstellung, wesentlich verbessert werden.

Die Erfindung wird im folgenden anhand von Ausführungsbeispielen näher erläutert.

**Beispiel 1**

a) Herstellung dwer Schiffschen Base:

130 g γ-Aminopropyltriethoxysilan (A - 1100, UNION CARBIDE) werden bei Raumtemperatur in einem Rundkolben langsam unter Rühren mit 100 g Aceton versetzt Anschließend werden 0,1 g p-Toluolsulfonsäure zugegeben. Nach einer kurzen Induktionsperiode erwärmt sich das Reaktionsgemisch langsam auf 25 bis 27 °C. Zur Vervollständigung der Reaktion wird ca. 1 h bei 30 °C gerührt.

Es resultiert eine klare, schwach gelblich gefärbte Lösung, die ohne weitere Aufarbeitung in entsprechender Menge zum Schlichteansatz zugegeben werden kann.

b) Zusammensetzung der Schlichte:

| | Masse-% |
|---|---|
| - Polyolefindispersion (hergestellt aus 30 Masse-% eines unverseiften oxidierten Polyethylenwachses mit einer mittleren Molekülmasse von 1500 bis 2000 und 70 % entionisiertem Wasser; "Marvelan PED", Hersteller Fettchemie Karl-Marx-Stadt) | 5,0 |
| - Polyurethandispersion ("Xionel 9851", Hersteller SAVID/Italien) | 4,5 |
| - Gleitmittel (z.B.Fettsäurepolyglykolester) | 0,25 |
| - Vinyltris(2-methoxyethoxy)silan (A - 172, UNION CARBIDE) | 0,2 |
| - Schiffsche Base | 2,0 |
| - entionisiertes Wasser | auf 100,0. |

c) Herstellung der Schlichte:

In einem Mischbehälter wird ca. 1/10 der Gesamtmenge Wasser vorgelegt und mit verdünnter Essigsäure auf pH 4,5 eingestellt. Die entsprechende Menge Schiffscher Base wird langsam zugegeben. Nach 2 min wird der pH-Wert der Lösung mit halbkonzentrierter Essigsaure erneut auf pH 4 bis 4,5 eingestellt. Danach erfolgt die Zugabe des Vinylsilans.

Zur Komplettierung der Hydrolyse wird ca. 20 bis 30 min gerührt. In einem anderen Mischbehälter wird die restliche Menge Wasser vorgelegt, worauf nacheinander die Polyolefindispersion, die Polyurethandispersion und das Gleitmittel zugegeben werden.

Im letzten Arbeitsgang erfolgt die Zugabe der Haftmittellösung zum Bindegemisch.

Die Gesamtmischung wird mit Essigsäure auf pH 4,5 eingestellt.

d) Herstellung von geschlichteten Glasfasern:

Glasfasern werden in bekannter Weise durch Ausziehen von Strömen geschmolzenen Glases, die durch Öffnungen einer Spinndüse fließen, hergestellt. Diese Glasströme werden dünn ausgezogen, wobei das Ausziehen durch Aufspulen der Filamente (nach ihrer Vereinigung zu einem Spinnfaden) auf eine rotierende Hülse erfolgt. Vor der Vereinigung zu einem Spinnfaden werden die Fasern in bekannter Weise über ein kontinuierlich gespeistes Schlichteorgan mit der Schlichte überzogen.

Die spinnfeuchten Spulen werden in einem Heißluftofen bei 125 bis 140 °C getrocknet.

Der Roving aus den beschlichteten Glasfasern (2400 tex) ist flusenarm, zeigt eine gute Dispergierung in Elementarfäden und ist nicht verfärbt.

**Beispiel 2**

a) Herstellung der Schiffschen Base:

Die Herstellung der Schiffschen Base erfolgt gemäß Beispiel 1.

b) Zusammensetzung der Schlichte:

| | Masse-% |
|---|---|
| - Polyolefindispersion gemäß Beispiel 1 | 5,0 |
| - Polyurethandispersion gemäß Beispiel 1 | 4,5 |
| - Gleitmittel | 0,25 |
| - Vinyltris(2-methoxyethoxy)silan | 0,1 |
| - Schiffsche Base gemäß Beispiel 1 | 2,0 |
| - Chromkomplex (z.B. VOLAN A, Hersteller Du Pont) | 0,5 |
| - entionisiertes Wasser | auf 100,0. |

c) Herstellung der Schlichte:

In einem Mischbehälter wird ca. 1/10 der Gesamtmenge Wasser vorgelegt und mit verdünnter Essigsäure auf pH 4,5 eingestellt. Die entsprechende Menge Schiffscher Base wird langsam zugegeben. Anschließend wird der Chromkomplex langsam unter kräftigem Rühren zugesetzt. Nach 2 min wird der pH-Wert der Lösung mit halbkonzentrierter Essigsäure auf pH 4 bis 4,5 eingestellt. Danach erfolgt die Zugabe des Vinylsilans.

Zur Komplettierung der Hydrolyse wird ca. 20 bis 30 min gerührt. Der Ansatz der weiteren Schlichtebestandteile und die Vereinigung der Teillösungen erfolgt gemäß Beispiel 1.

d) Herstellung von geschlichteten Glasfasern

Die Herstellung und Trocknung der geschlichteten Glasfasern erfolgt wie in Beispiel 1.

Der Roving aus den geschlichteten Glasfasern (2400 tex) ist flusenarm, zeigt eine gute Dispergierung in Elementarfäden und hat einen weichen Griff. Er ist nicht verfärbt.

Beim Einsatz der nach Beispiel 2 geschlichteten Glasfasern werden die Werte für die Schlagbiegefestigkeit bei Polyamid auf ca. 140 % und bei chemisch gekoppeltem Polypropylen auf ca. 160 % gesteigert.

Die Zugfestigkeiten erreichen Steigerungen auf 108 bzw. 120 %.

**Vergleichsbeispiel**

a) Zussamensetzung der herkömmlichen Schlichte:

| | Masse-% |
|---|---|
| - Polyolefindispersion gemäß Beispiel 1 | 5,0 |
| - Polyurethandispersion gemäß Beispiel 1 | 4,5 |
| - Vinylbis(2-methoxyethoxy)silan (A - 172, UNION CARBIDE) | 0,2 |
| - NB 1114 | 1,0 |
| - Gleitmittel | 0,25 |
| - entionisiertes Wasser | auf 100,0. |

b) Herstellung der Schlichte sowie von geschlichteten Glasfasern

Die Herstellung der Schlichte sowie die Herstellung der entsprechenden Glasfasern erfolgen gemäß Beispiel 1.

Anhand des so geschlichteten E-Glases werden bei der Compoundherstellung mit Polyamid bzw. chemisch gekoppeltem Polypropylen (jeweils 30 Masse-% Glas) Schlagbiegefestigkeiten von 45,7 bzw. 38,7 $kJ/m^2$ erreicht).

Die Zugfestigkeiten belaufen sich auf 115 bzw. 64 MPa (geprüft an ISO-Stäben 80 x 10 x 4 mm).

Beim Einsatz der nach Beispiel 1 geschlichteten Glasfasern werden die Werte für die Schlagbiegefestigkeit beim Polyamid auf ca. 140 % und beim chemisch gekoppelten Polypropylen auf ca. 145 % gesteigert.

Die Zugfestigkeiten erreichen Steigerungen auf 105 bzw. 120 %.

## Ansprüche

1. Schlichte zur Behandlung von Glasfasern, die zur Verstärkung in Thermoplaste eingearbeitet werden, wobei die Schlichte als Bestandteil ein reaktives Silan aufweist,
**dadurch gekennzeichnet,**
daß sie eine Schiffsche Base der Formel

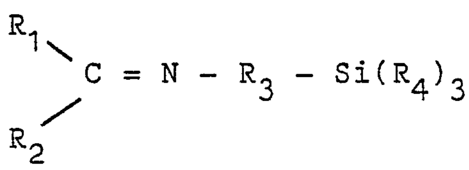

enthält, in der bedeuten:
$R_1$, $R_2$ zugleich oder unabhängig
- Wasserstoff,
- einen aliphatischen Rest mit 1 bis 18 C-Atomen,
- einen aliphatischen Rest mit einer oder mehreren ethylenisch ungesättigten Gruppen,
- einen cycloaliphatischen Rest,
- einen aromatischen, ggfs. substituierten und ggfs. aus mehreren Kernen bestehenden Rest oder
- einen Carbonylgruppen enthaltenden aliphatischen, cycloaliphatischen oder aromatischen Rest,

$R_3$ - einen zweiwertigen aliphatischen, cycloaliphatischen oder aromatischen und ggfs. substituierten Rest,
- einen zweiwertigen aliphatischen Rest mit 1 bis 18 C-Atomen mit einer oder mehreren ethylenisch ungesättigten Gruppen oder
- einen zweiwertigen, ein oder mehrere Stickstoffatome enthaltenden aliphatischen Rest

und

$R_4$ einen Methoxy-, Ethoxy-, Propoxy-, n-Butoxy-, Acetoxy-, $\beta$-Methoxy- oder $\beta$-Ethoxy-Rest.

2. Schlichte nach Anspruch 1, gekennzeichnet durch eine Stoffsche Base der Formel nach Anspruch 1, in der $R_1$ und $R_2$ Methyl, $R_3$ Propylen $-CH_2-CH_2-CH_2-$ und $R_4$ Ethoxy bedeuten.

3. Schlichte nach Anspruch 1, gekennzeichnet durch eine Schiffsche Base der Formel nach Anspruch 1, in der $R_1$ bzw. $R_2$ Ethyl, Propyl, Butyl oder Pentyl, $R_3$ Methylen $-CH_2-$ , Ethylen $-CH_2-CH_2-$, Propylen $-CH_2-CH_2-CH_2-$ oder Butylen $-CH_2-CH_2-CH_2-CH_2-$ und $R_4$ Methoxy, Ethoxy, Propoxy, n-Butoxy oder Acetoxy bedeuten.

4. Schlichte nach einem der Ansprüche 1 bis 3, dadurch gekennzeichnet, daß sie die Schiffsche Base in einer Konzentration von 0,05 bis 2 Masse-%, bezogen auf die Trockenmasse, enthält.

5. Schlichte nach einem der Ansprüche 1 bis 4, gekennzeichnet durch folgende Zusammensetzung:
10 bis 60 Masse-% Polyolefin,
0 bis 50 Masse-% Polyurethan,
0 bis 1 Masse-% Vinylsilan und
0,05 bis 2 Masse-% Schiffschen Base,
bezogen auf die Trockenmasse auf dem Glasfaden,
wobei die Summe der Prozentgehalte der Bestandteile jeweils 100 % beträgt.

6. Verfahren zur Herstellung der Schlichte nach einem der Ansprüche 1 bis 5, gekennzeichnet durch

(A) Herstellung eines Haftmittelgemisches durch

- Vorlegen eines Teils der vorgesehenen Gesamtmenge an Wasser,
- Einstellung des pH-Wertes auf einen Wert im sauren Bereich durch Zusatz einer Säure,
- Zugabe der entsprechenden Schiffschen Base,
- Nacheinstellung des pH-Wertes durch Zusatz einer Säure,
- Zugabe des Vinylsilans

und

- Vervollständigung der Umsetzung unter Rühren,

(B) Herstellung eines Bindemittelgemisches durch

- Vorlegen des restlichen Teils der vorgesehenen Gesamtmenge an Wasser

und

- aufeinanderfolgende Zugabe der Polyolefindispersion und ggfs. eines Gleitmittels

und

(C) Mischen des Haftmittelgemisches aus (A) und des Bindemittelgemisches aus (B) und pH-Einstellung.

7. Verfahren zur Herstellung geschlichteter Glasfasern zum Einbringen als Verstärkungsmaterial in Thermoplaste, gekennzeichnet durch

- Erzeugung von Glasfasern aus einer Glasschmelze durch Verspinnen,
- Beschichtung mit einer Schlichte nach einem der Ansprüche 1 bis 5,
- Vereinigung der Glasfaser-Filamente zu einem Spinnfaden

und

- Trocknen der Glasfasern bei 125 bis 140 °C.

8. Geschlichtete Glasfasern, erhältlich nach dem Verfahren von Anspruch 7.